# EUROPÄISCHE PATENTSCHRIFT

(11) **EP 0 815 362 B1**
(45) Veröffentlichungstag und Bekanntmachung des Hinweises auf die Patenterteilung: **12.06.2002**
(21) Anmeldenummer: 96904847.9
(22) Anmeldetag: 22.02.1996
(51) Int. Cl.: F15B 13/042, F16K 27/02

(54) **ZWEI-WEGE-EINBAUVENTIL**
TWO-WAY INSERT VALVE
SOUPAPE INSERABLE A DEUX VOIES

(30) Priorität: 23.03.1995 DE 19510500; 30.11.1995 DE 19544592
(43) Veröffentlichungstag der Anmeldung: 07.01.1998
(73) Patentinhaber: Mannesmann Rexroth AG, 97816 Lohr am Main (DE)
(72) Erfinder: CORDS, Karl, D-97846 Partenstein (DE); FESER, Hubert, D-97737 Gemünden (DE); HUNSCHEDE, Karlheinz, D-97828 Marktheidenfeld (DE); MACHAT, Götz-Dieter, D-97816 Lohr (DE); RAUSCH, Georg, D-97816 Lohr (DE)
(86) Internationale Anmeldenummer: EP9600737
(87) Internationale Veröffentlichungsnummer: WO9629518

(56) Entgegenhaltungen:
- EP-A- 0 634 577
- DE-A- 3 619 927
- DE-A- 4 218 325
- DE-A- 4 240 838
- DE-C- 3 741 521
- DE-U- 9 406 842
- MACHINE DESIGN, Bd. 52, Nr. 28, 11.Dezember 1980, CLEVELAND US, Seiten 143-147, XP002009011 DAVID C. DOWNS: "cartridge check valves: New option for hydraulic control."

## Beschreibung

Die Erfindung geht aus von einem Zwei-Wege-Einbauventil, das die Merkmale aus dem Oberbegriff des Anspruchs 1 aufweist.

Der Begriff Zwei-Wege-Einbauventil ist die nach DIN 24 342 offizielle Bezeichnung für ein hydraulisches Steuerelement. Dieses ist auch unter dem Namen Logikelement oder Cartridge bekannt. Vom Grundprinzip her handelt es sich um ein 2/2-Wege-Ventil, also um ein Wegeventil mit zwei Arbeitsanschlüssen und den beiden Schaltstellungen offen oder geschlossen. Es ist dafür konzipiert, in eine Aufnahmebohrung eines Steuerblocks eingebaut zu werden. Durch entsprechende Ansteuerung und Verknüpfung von Zwei-Wege-Einbauventilen können Fließrichtung, Größe sowie Druck eines Flüssigkeitsstromes beeinflußt werden. Das Ventil kann also Wegefunktionen, Stromfunktionen oder Druckfunktionen übernehmen. Die Technik der Zwei-Wege-Einbauventile ist umfassend dargestellt in dem Buch "Der Hydraulik-Trainer", Band 4, 1. Auflage, herausgegeben von der Mannesmann Rexroth GmbH im Jahre 1989.

Ein Zwei-Wege-Einbauventil besteht im wesentlichen aus einem in die Aufnahmebohrung des Steuerblocks einbaubaren Einbausatz und einem die Aufnahmebohrung verschließenden Ventildeckel. Der Einbausatz wiederum umfaßt ein ortsfest im Steuerblock angeordnetes buchsenartiges Gehäuse mit mehreren radialen Durchgängen und mit einem axialen Durchgang sowie einen im Gehäuse axial verschiebbaren Ventilkolben, mit dem eine Verbindung zwischen den radialen Durchgängen und dem axialen Durchgang steuerbar ist und der in Öffnungsrichtung bis gegen einen Anschlag verschiebbar ist. Normalerweise gehört zum Einbausatz auch eine den Ventilkolben belastende Schließfeder. Das buchsenartige Gehäuse kann einstückig durch eine einzige Buchse gebildet werden, wie dies für die in dem erwähnten Buch dargestellten Zwei-Wege-Einbauventile oder bei einem aus der EP 0 634 577 A1 bekannten Zwei-Wege-Einbauventil der Fall ist.

Bei anderen Ausführungen ist das Gehäuse zweistückig ausgebildet und besitzt eine Buchse, in der sich die im Hauptstrom liegenden radialen und axialen Durchgänge befinden, und einen zwischen der Buchse und dem Ventildeckel angeordneten Ring. Gemäß dem Oberbegriff des Anspruchs 1 betrifft die Erfindung ein solches Zwei-Wege-Einbauventil.

Vorbekannt ist ein solches Zwei-Wege-Einbauventil z.B. aus dem RD-Blatt 81 056/4.79 der Mannesmann Rexroth GmbH oder aus dem Prospekt HP/VEK 2-AKY 011/1 De/En/Fr (5.90) der Robert Bosch GmbH. Auch die DE 42 18 325 A1 zeigt ein Zwei-Wege-Einbauventil mit Buchse und Ring. Bei diesen vorbekannten Zwei-Wege-Einbauventilen der zweiteiligen Bauart ist der Ventilkolben in der Buchse axial geführt und stößt bei maximalem Hub gegen den Ring. Bei dem Zwei-Wege-Einbauventil nach dem RD-Blatt ist die Führungslänge zwischen der Buchse und dem Ventilkolben unabhängig von der jeweiligen Position des Ventilkolbens und entspricht in etwa dem Abstand der dem Ring zugewandten, ersten Stirnseite der Buchse von den radialen Durchgängen vermindert um den maximalen Hub des Ventilkolbens. Dies folgt aus einer äußeren Eindrehung des Ventilkolbens, die sich in der Schließstellung des Ventilkolbens im Bereich der radialen Durchgänge befindet.

Bei dem Zwei-Wege-Einbauventil nach dem Prospekt der Fa. Bosch oder nach der DE 42 18 325 A1 reicht die Führungsfläche am Ventilkolben in dessen Schließstellung etwa eine dem maximalen Hub entsprechenden Strecke in den Bereich der radialen Durchgänge der Buchse hinein. Dies bringt es mit sich, daß sich mit zunehmendem Hub des Ventilkolbens die Führungslänge vergrößert und in etwa dem Abstand der dem Ring zugewandten Stirnseite der Buchse von den radialen Durchgängen entspricht, wenn der Ventilkolben am Ring angeschlagen ist.

Eine bestimmte Nenngröße vorausgesetzt, ist man bestrebt, ein Zwei-Wege-Einbauventil so auszubilden, daß der beim Fluß einer großen Druckmittelmenge durch das Ventil entstehende Druckabfall sehr gering ist.

Ziel der Erfindung ist es also, bei einem Zwei-Wege-Einbauventil mit den Merkmalen aus dem Oberbegriff des Anspruchs 1 den Durchflußwiderstand weiter zu verringern.

Um dieses Ziel zu erreichen, ist gemäß dem kennzeichnenden Teil des Anspruchs 1 der Ventilkolben in seiner Schließstellung bis zu einem von der dem Ring zugewandten, ersten Stirnseite der Buchse gemessenen Abstand, der kleiner als der maximale Hub ist, von der Buchse geführt ist und kann bei der Öffnungsbewegung über die Buchse hinaus in den Ring eintauchen. Somit kann die Führungslänge zwischen der Buchse und dem Ventilkolben bis auf die ganz geöffnete Position des Ventilkolbens in jeder Position größer sein als bei den Zwei-Wege-Einbauventilen nach dem RD-Blatt, dem Prospekt oder der DE 42 18 325 A1. Insbesondere kann die Führungslänge bei geschlossenem Ventil oder nur leicht geöffnetem Ventil wesentlich größer sein als bei den bekannten Einbauventilen, wenn man mit Ausnahme ders Merkmale aus dem kennzeichnenden Teil des Anspruchs 1 ansonsten eine gleiche Ausbildung der Ventile voraussetzt. Größere Führungslänge bedeutet zum einen, daß die Gefahr des Verkantens des Ventilkolbens verringert ist und daß weniger Leckage durch den Spalt zwischen der Führungsbuchse und dem Ventilkolben stattfindet. Umgekehrt bedeutet dies, daß bei einem Zwei-Wege-Einbauventil der Durchmesser des Ventilkolbens und damit auch der Durchmesser des axialen Durchgangs und auch die Abmessungen der radialen Durchgänge in Achsrichtung der Buchse vergrößert werden können, ohne daß die Funktionsfähigkeit des Ventils darunter leidet. Denn man muß davon ausgehen, daß auch schon bei den Ventilen nach dem Stand der Technik das Verhältnis zwischen der Führungslänge und dem Durchmesser des Ventilkolbens den gestellten Anforderungen weitgehend genügt hat. Große Durchgänge durch die Buchse bringen einen kleinen Durchflußwiderstand des Ventils mit sich.

Freilich ist eine erfindungsgemäße Ausbildung eines Zwei-Wege-Einbauventils auch ohne zusätzliche Maßnahmen hinsichtlich der Größe der Durchgänge oder des Durchmessers des Ventilkolbens von Vorteil im Hinblick auf die Leckage entlang des Spaltes zwischen der Buchse und dem Ventilkolben sowie im Hinblick auf die Führung des Ventilkolbens in der Buchse.

Zweckmäßige Weiterbildungen eines erfindungsgemäßen Zwei-Wege-Einbauventils kann man den Unteransprüchen entnehmen.

Eine besonders bevorzugte Ausgestaltung findet sich dabei z.B. im Anspruch 4, gemäß dem der Ventildeckel den Anschlag bildet, bis zu dem der Ventilkolben in Öffnungsrichtung verschiebbar ist. Damit lassen sich eine große Führungslänge zwischen Ventilkolben und Buchse mit einem großen maximalen Hub des Ventilkolbens und einem stabilen Anschlag verbinden. Bei Zwei-Wege-Einbauventilen mit einem zweiteiligen Gehäuse bestehend aus einer Buchse und einem Ring befindet sich zwischen dem Ring und dem Deckel eine Axialdichtung, mit der der Steuerraum hinter dem Ventilkolben nach außen abgedichtet ist. Eine Radialdichtung befindet sich zwischen der Buchse und dem die Buchse außen übergreifenden Ring, womit eine Leckage zwischen dem Steuerraum und einem zwischen Buchse und Steuerblock bestehenden Ringraum über den Spalt zwischen Buchse und Ring verhindert wird. Den Dichtungsdurchmesser der Axialdichtung zwischen Ring und Ventildeckel macht man bevorzugt kleiner als den Dichtungsdurchmesser der Radialdichtung. Dadurch wird erreicht, daß der Steuerdruck den Ring am Ventildeckel hält. Um nun bei einem erfindungsgemäßen Zwei-Wege-Einbauventil den Dichtungsdurchmesser der Axialdichtung zwischen Ring und Ventildeckel zu begrenzen, weist gemäß Anspruch 6 der Ring einen nach innen vorstehenden Bund auf, dessen Innendurchmesser kleiner ist als der Innendurchmesser der Buchse im Bereich der Führung des Ventilkolbens, und der Ventilkolben besitzt einen Endabschnitt, der schon in der Schließstellung des Ventilkolbens in Richtung auf den Ventildeckel zu über die Buchse hinausragt und an dem der Außendurchmesser des Ventilkolbens kleiner als der Innendurchmesser des Bundes am Ring ist. Durch den Bund am Ring wird die Auflagefläche für eine Axialdichtung nach innen über den Innendurchmesser der Buchse hinaus erweitert. Der kleinere Außendurchmesser am Endabschnitt des Ventilkolbens ermöglicht es, daß der Ventilkolben durch den Innenbund des Rings hindurchtauchen und am Deckel anschlagen kann.

Gemäß Anspruch 7 ist der Außendurchmesser des Ventilkolbens an dem Endabschnitt nur geringfügig kleiner als der Innendurchmesser des Bundes am Ring. Dadurch ergibt sich in dem Moment, in dem der Endabschnitt in den Innenbund des Ringes eintaucht, eine mit Druckmittel gefüllte geschlossene Kammer zwischen dem Ventilkolben und dem Ring, aus der während der weiteren Bewegung des Ventilkolbens das Druckmittel nur über den engen Spalt zwischen dem Endabschnitt des Ventilkolbens und dem Innenbund des Ringes verdrängt werden kann. Dadurch wird das Anschlagen des Ventilkolbens hydraulisch gedämpft. Die Materialstärke am Endabschnitt des Ventilkolbens kann relativ gering sein. Die Gefahr, daß sich durch einen harten Anschlag des Ventilkolbens Feststoffpartikel lösen und in den Ölkreislauf gelangen, ist gering.

Wenn der Dichtungsdurchmesser der Axialdichtung zwischen dem Ring und dem Deckel zwar kleiner ist als der Dichtungsdurchmesser der Radialdichtung zwischen der Buchse und dem die Buchse außen axial übergreifenden Ring, der Unterschied zwischen den Dichtungsdurchmessern jedoch nur gering ist, ist nicht in jedem Fall gewährleistet, daß der Ring von dem den Ventilkolben in Schließrichtung beaufschlagenden Steuerdruck gegen den Ventildeckel gedrückt wird. Es besteht dann die Gefahr, daß die Axialdichtung in einen sich zwischen Ring und Ventildeckel bildenden Axialspalt einwandert und sehr schnell verschleißt, so daß äußere Leckage am Ventil auftritt.

Es hat sich gezeigt, daß durch eine Ausbildung gemäß Anspruch 8, ein Verschleiß der Axialdichtung weitgehend vermieden werden kahn. Durch eine oder mehrere Unstetigkeiten, insbesondere Vertiefungen, in einer dem anderen Teil axial gegenüberliegenden Fläche der Buchse oder des Rings wird ein Klebeeffekt zwischen Buchse und Ring soweit verringert, daß auch ein kleiner Unterschied zwischen den Dichtungsdurchmessern gewährleistet, daß der Ring vom Steuerdruck immer gegen den Ventildeckel gedrückt wird.

Üblicherweise ist die Buchse an ihrer dem Ring gegenüberliegenden Stirnfläche außen mit einer Fase versehen, die das Zusammenschieben von Buchse und Ring erleichtert. Gemäß Anspruch 11 wird nun durch eine offene Verbindung zwischen dem Ringraum an der Fase und der Innenseite der Buchse, also dem rückwärtigen Steuerraum am Ventilkolben, dafür gesorgt, daß in dem Ringraum immer der gleiche Druck wie im Steuerraum herrscht und die Fläche am Ring, an der der Steuerdruck im Sinne eines Andrückens des Rings an den Ventildeckel wirkt, durch einen Klebeeffekt zwischen Buchse und Ring nur begrenzt verringert ist. Die offene Verbindung kann über den Ring oder die Buchse geschaffen sein. Insbesondere wird durch eine Vertiefung, die sich in einer dem anderen Teil axial gegenüberliegenden Fläche von Buchse oder Ring befindet und zur Verringerung des Klebeeffekts dient, auch die offene Verbindung geschaffen.

Gemäß Anspruch 12 ist der Außendurchmesser der Buchse im Bereich der Radialdichtung zwischen ihr und dem sie außen übergreifenden Ring größer als in einem Abschnitt jenseits der radialen Durchgänge, dessen Außendurchmesser durch den dortigen Durchmesser der Aufnahmebohrung bestimmt ist. Durch eine solche Ausbildung läßt sich zweierlei erreichen. Zum einen kann der Dichtungsdurchmesser der Radialdichtung auch dann noch größer als ein schon großer Dichtungsdurchmesser der Axialdichtung zwischen dem Ring und dem Ventildeckel gemacht werden. Zum anderen ist auch dann noch genügend Material im Bereich der Radialdichtung an der Buchse vorhanden, wenn der Durchmesser des Ventilkolbens groß ist.

Ist der Durchmesser des Ventilkolbens groß, so bedeutet dies, eine geringe Wandstärke der Buchse im Bereich des Ringraums zwischen ihr und dem Steuerblock, sofern man nicht durch eine Vergrößerung des Außendurchmessers der Buchse den Querschnitt des Ringraums verkleinert. Bei geringer Wandstärke der Buchse ist diese vor allem im Bereich der radialen Durchgänge gefährdet, verformt zu werden oder zu brechen.

Gemäß den Ansprüchen 13 und 14 kann diese Gefahr dadurch verringert werden, daß der Außendurchmesser der Buchse auf der einen oder der anderen Seite oder beidseits der radialen Durchgänge kleiner ist als im Bereich dieser Durchgänge.

Ein Ausführungsbeispiel eines erfindungsgemäßen Zwei-Wege-Einbauventils ist in den Zeichnungen dargestellt. Anhand der Figuren dieser Zeichnungen wird die Erfindung nun näher erläutert.

Es zeigen
- Figug 1: in einem axialen Längsschnitt das Ausführungsbeispiel in Schließstellung des Ventilkolbens,
- Figur 2: im selben Schnitt wie in Figur 1 das Ausführungsbeipiel bei halbgeöffnetem Ventilkolben,
- Figur 3: in demselben Längsschnitt wie in Figur 1 das Ausführungsbeispiel bei ganz geöffnetem Ventilkolben und
- Figur 4: einen vergrößerten Ausschnitt aus Figur 1.

Das gezeigte Zwei-Wege-Einbauventil besitzt im wesentlichen einen Einbausatz 10, der in eine Aufnahmebohrung 11 eines Steuerblocks 12 eingebaut ist, und einem Ventildeckel 13, der, die Aufnahmebohrung 11 verschließend, am Steuerblock 12 befestigt ist und den Einbausatz 10 in der Aufnahmebohrung 11 hält. Die Aufnahmebohrung ist eine Stufenbohrung, deren Form und Größe in Abhängigkeit von der Nennweite des Ventils in Deutschland durch die DIN 24 342 genormt ist. Die erste Bohrungsstufe 14 der Aufnahmebohrung 11 geht von einer ebenen Außenfläche des Steuerblocks 12 aus und ist in ihrer Länge und in ihrem Durchmesser größer als die zweite Bohrungsstufe 15. Die beiden Bohrungsstufen 14 und 15 gehen in einer radialen Schulter 16 ineinander über.

Ein erster Hauptstromanschluß 17 für eine Hydraulikflüssigkeit mündet im Steuerblock 12 koaxial in die zweite Bohrungsstufe 15. Ein zweiter Hauptstromanschluß 18 mündet im Steuerblock 12 radial und knapp oberhalb der Schulter 16 in die erste Bohrungsstufe 14. Der Steuerblock 12 besitzt außerdem einen Steuerkanal 19, der sich im Ventildeckel 12 fortsetzt und in einem vom Einbausatz freigelassenen Bereich des Ventildeckels zur Aufnahmebohrung 11 hin nach außen in einen Steuerraum mündet.

Der Einbausatz 10 besteht, sieht man zunächst von diversen Dichtungen ab, aus einer Buchse 25, einem Ring 26, die, läßt man fertigungsbedingtes axiales Spiel außeracht, beide fest im Steuerblock 12 angeordnet sind, einem Ventilkolben 27, der sich innerhalb von Buchse und Ring befindet, und einer Schließfeder 28, die sich einerseits innerhalb einer zum Deckel 13 hin offenen Sackbohrung 29 am Ventilkolben 27 und andererseits am Dekkel 13 abstützt. Die Buchse 25 ist mit einem Endabschnitt 30, in dem ihr Durchmesser dem Durchmesser der Bohrungsstufe 15 entspricht, in die Bohrungsstufe 15 bis zum Aufsetzen ihrer Stirnseite 39 eingeschoben. In einer umlaufenden Ringnut nimmt der Endabschnitt 30 eine Radialdichtung 31 auf, die aus einem gummielastischen mittleren Ring und zwei Stützringen zu beiden Seiten des mittleren Rings besteht.

Mit ihrem anderen Endabschnitt 32 taucht die Buchse 25 bis zu einer radialen Innenschulter in den Ring 26 ein, der zwischen der Buchse 25 und dem Deckel 13 angeordnet ist und über den Endabschnitt 32 der Buchse 25 greift. Auch im Endabschnitt 32 besitzt die Buchse 25 außen eine Ringnut, in die eine Radialdichtung 33 eingelegt ist, die wie die Radialdichtung 31 aus einem gummielastischen mittleren Ring und zwei seitlichen Stützringen besteht und die den Radialspalt zwischen der Buchse 25 und dem Ring 26 abdichtet. Im Endabschnitt 32 ist der Außendurchmesser der Buchse 25 größer als im Endabschnitt 30. Zwischen den beiden Endabschnitten 30 und 32 ist der Außendurchmesser der Buchse 25 kleiner als der Durchmesser der Bohrungsstufe 14, so daß sich ein Ringraum 34 ergibt, in den der radiale Hauptstromanschluß 18 mündet. Damit der Querschnitt dieses Ringraums 34 groß ist, schließt sich an den Endabschnitt 32 der Buchse 25 ein Abschnitt 35 an, in dem der Außendurchmesser der Buchse etwa dem Außendurchmesser im Endabschnitt 30 entspricht. Zwischen dem Abschnitt 35 und dem Endabschnitt 30 besitzt die Buchse 25 vier gleichmäßig über ihren Umfang verteilte Radialbohrungen 36, durch die eine Verbindung zwischen dem Inneren der Buchse und der Ringkammer 34 geschaffen ist. Im Bereich der Radialbohrungen 36, ist, wie die gestrichelten Linien zeigen, die einen Axialschnitt zwischen zwei Radialbohrungen 36 andeuten, der Außendurchmesser der Buchse 25 größer als im Abschnitt 35 und im Endabschnitt 30, so daß auch bei wie im vorliegenden Fall großen Radialbohrungen die Gefahr einer Verformung oder eines Bruchs der Buchse gering ist. Zwischen den Radialbohrungen 36 und einem durch den Endabschnitt 30 der Buchse 25 hindurchgehenden axialen Durchgang 37 besitzt die Buchse 25 innen eine Kegelfläche 38 als Sitz für den Ventilkolben 27. Zwischen den Radialbohrungen 36 und der dem Ring 26 zugewandten Stirnseite 45 der Buchse 25 ist, abgesehen von einer kurzen Einführschräge 46, das Innere der Buchse 25 als Führungsbohrung 44 für den Ventilkolben 27 ausgebildet. Im Bereich der Radialbohrungen 36 ist der Innendurchmesser der Buchse 25 durch einen umlaufenden Einstich 47 gegenüber dem Innendurchmesser im Bereich der Führung für den Ventilkolben etwas vergrößert.

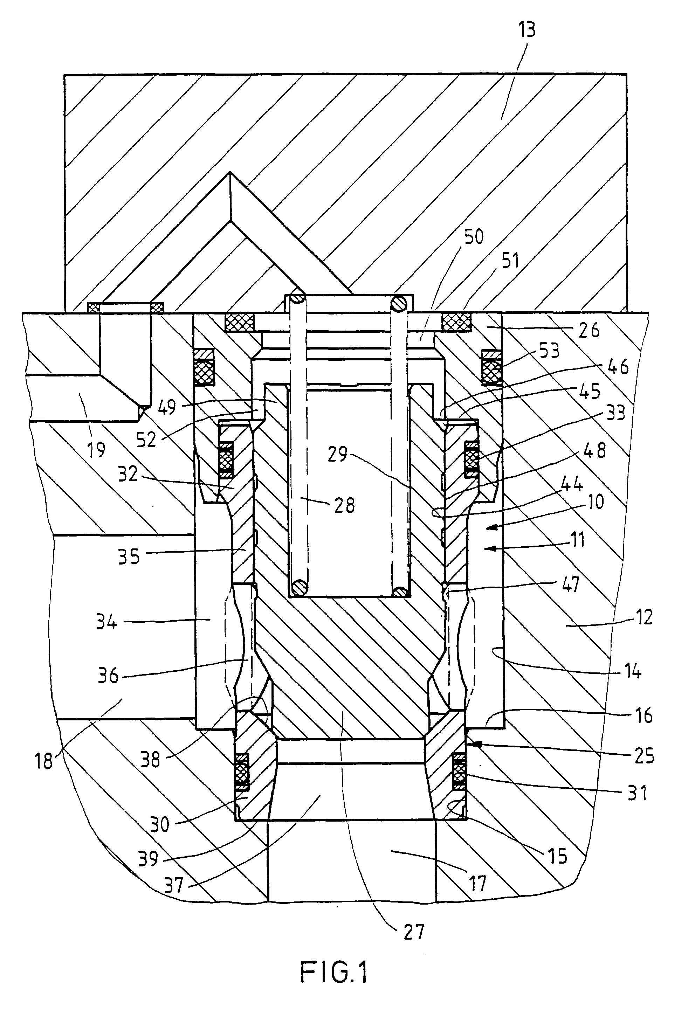

In der in Figur 1 gezeigten Schließstellung des Ventilkolbens 27 reicht dessen kreiszylindrische Führungsaußenfläche 48 etwa von der Stirnseite 45 der Buchse 25 aus bis etwa zur Mitte des Einstichs 47, wodurch sich die Führungsaußenfläche 48 etwa um den maximalen Hub des Ventilkolbens 27 über die Führungsbohrung 44 der Buchse 25 hinauserstreckt. Zur dem Ventilsitz 38 zugekehrten Stirnseite hin verjüngt sich der Ventilkolben 27, sitzt also mit einer kreisförmigen Steuerkante auf dem Ventilsitz 38 auf, deren Durchmesser kleiner ist als der Durchmesser des Ventilkolbens 27 im Bereich der Führungsaußenfläche 48. Zum Deckel 13 hin überragt der Ventilkolben 27 die Buchse 25 mit einem Endabschnitt 49, in dem der Außendurchmesser des Ventilkolbens kleiner ist als im Bereich der Führungsaußenfläche 48, so daß es dem Ventilkolben 27 möglich ist, mit dem Endabschnitt 49 durch einen Innenbund 50 des Ringes 26 hindurchzutauchen und an den Deckel 13 anzuschlagen. Der lichte Abstand, den der Ventilkolben 27 in seiner Schließstellung vom Deckel 13 hat, bestimmt den maximalen Hub des Ventilkolbens, wobei natürlich ein entsprechender Freiraum zwischen dem Ventilkolben 27 und dem Ring 26 vorhanden ist. Der Innenbund 50 am Ring 26 vergrößert radial nach innen hin die Auflagefläche am Ring 26 für eine zwischen diesem und dem Deckel 13 wirksame Axialdichtung 51, deren Dichtungsdurchmesser kleiner ist der Dichtungsdurchmesser der Radialdichtung 33. Weil der Außendurchmesser des Ventilkolbens 27 am Endabschnitt 49 nur geringfügig kleiner als der Innendurchmesser des Ringes 26 im Bereich des Innenbundes 50 ist, bringt es der Bund 50 außerdem mit sich, daß zwischen dem Ring 26 und dem Ventilkolben 27 in einem Ringraum 52 Hydraulikflüssigkeit eingeschlossen wird, die bei der weiteren Verschiebung des Ventilkolbens 27 auf den Deckel 13 zu über den engen Spalt zwischen dem Endabschnitt 49 des Ventilkolbens 27 und dem Innenbund 50 des Ringes 26 verdrängt werden muß, so daß die Bewegung des Ventilkolbens 27 und sein Anschlagen am Deckel 13 hydraulisch gedämpft sind.

Zur Vervollständigung sei noch auf die Radialdichtung 53 hingewiesen, die in einer Außennut des Ringes 26 liegt und zwischen dem Ring 26 und dem Steuerblock 12 wirksam ist. Sie dichtet also die Ringkammer 34 zu dem Axialspalt zwischen dem Steuerblock 12 und dem Deckel 13 und damit nach außen hin ab.

Von Vorteil bei der zweiteiligen Ausführung des Einbausatzes mit Buchse 25 und Ring 26 ist, daß der Ring 26 sowohl von einem Druck in der Ringkammer 34 als auch von einem Steuerdruck, der in dem Steuerraum zwischen dem Deckel 13 und dem Ventilkolben 27 herrscht, in Richtung auf den Deckel 13 zu beaufschlagt ist, so daß die Axialdichtung 51 und die Radialdichtung 53, die beide nach außen wirken, nur statisch belastet sind und die Gefahr einer Leckage nach außen gering ist. Daß auch der Steuerdruck den Ring 26 in Richtung auf den Deckel 13 zu beaufschlagt, ist darauf zurückzuführen, daß der Dichtungsdurchmesser der Radialdichtung 33 größer als der Dichtungsdurchmesser der Axialdichtung 51 ist. Dieses Verhältnis zwischen den Dichtungsdurchmessern der Dichtungen 51 und 33 aufrechtzuerhalten, ist also auch bei der gezeigten Ausführung eines erfindungsgemäßen Zwei-Wege-Einbauventils gelungen, bei der der Ventilkolben 27 an dem Dekkel 13 anschlägt.

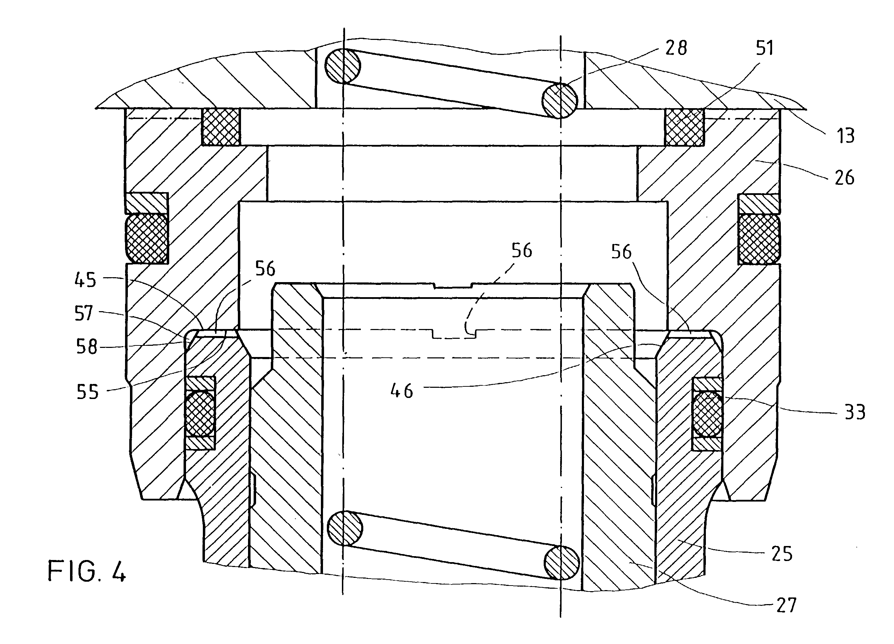

Nun besteht allerdings die Möglichkeit, daß aufgrund eines Klebeeffekts zwischen der Buchse 25 und dem Ring 26, die mit der Stirnfläche 45 der Buchse und mit der Innenschulterfläche 55 des Rings aneinanderliegen können, die Gesamtfläche am Ring, an der ein im Inneren des Einbausatzes herrschender Steuerdruck im Sinne eines Andrückens des Ringes 26 an den Deckel 13 wirkt, kleiner wird als die Fläche, an der der Steuerdruck im Gegensinne wirkt. Der Ring 26 wird dann vom Deckel 13 weggedrückt. Es entsteht zwischen Ring und Deckel ein Axialspalt, der in Figur 4 strichpunktiert eingezeichnet ist, und in den die Axialdichtung 51 einwandert, wenn ein Steuerdruck ansteht. Die Axialdichtung 51 verschleißt dann sehr schnell.

Um dies zu vermeiden, sind bei dem gezeigten Ausführungsbeispiel in die Stirnfläche 45 der Buchse 25 mehrere Nuten 56 eingebracht, durch die ein Klebeeffekt zwischen der Stirnfläche 45 der Buchse 25 und der Innenschulterfläche 55 des Rings 26 weitgehend vermieden wird. Von Vorteil ist dabei auch, daß durch die Nuten 56 eine offene Verbindung zwischen dem Inneren der Buchse 25 und des Ringes 26 und einem Ringraum 57 geschaffen ist, der aufgrund einer Fase 58 außen an der Stirnfläche 45 der Buchse 25 zwischen der Buchse 25 und dem Ring 26 gebildet ist. Somit herrscht in dem Ringraum 57, auch wenn die Flächen 45 und 55 aneinanderliegen sollten, derselbe Druck wie im Inneren von Buchse und Ring. Entsprechend ist die Wirkfläche im Sinne eines Andrückens des Ringes 26 an den Deckel 13 vergrößert.

Anstelle der Nuten 56 kann in die Stirnfläche 45 der Buchse 25 auch eine Spiralnut eingebracht sein, die von der Innenseite zur Außenseite der Buchse führt. Eine solche Spiralnut läßt sich auf einfache Weise fertigen.

Die in Figur 1 gezeigte Schließstellung nimmt der Ventilkolben 27 ein, wenn die Summe aus der Kraft der Schließfeder 28 plus der Kraft, die ein Steuerdruck an einer kreiszylindrischen Fläche, deren Durchmesser dem Durchmesser der Führungsfläche 48 entspricht, erzeugt, größer ist als die Summe der Kraft, die ein Druck im Hauptstromanschluß 17 an einer Kreisfläche mit dem Sitzdurchmesser erzeugt plus der Kraft, die ein Druck in der Ringkammer 34 an einer Ringfläche erzeugt, deren Außendurchmesser dem Durchmesser der Führungsaußenfläche 48 und deren Innendurchmesser dem Sitzdurchmesser entspricht. Wird der Steuerraum zu einem Tank entlastet, so kann sowohl ein Druck in der Ringkammer 34 als auch ein Druck im Hauptstromanschluß 17 den Ventilkolben 27 vom Ventilsitz 38 abheben, sofern der Druck nur groß genug ist, um die Kraft der Schließfeder 28 zu überwinden. Der Ventilkolben 27 hebt vom Ventilsitz 38 ab, wobei er sich mit seiner Führungsaußenfläche 48 über die Stirnseite 45 der Buchse 25 hinausschiebt. Die Führungslänge ändert sich dabei jedoch nicht, da die Führungsaußenfläche 48 am Ventilkolben 27 länger als die Führungsbohrung 44 der Buchse 25 ist. Über den gesamten Weg des Ventilkolbens 27 ist die Führungslänge also durch die Länge der Führungsbohrung 44 bestimmt und konstant.

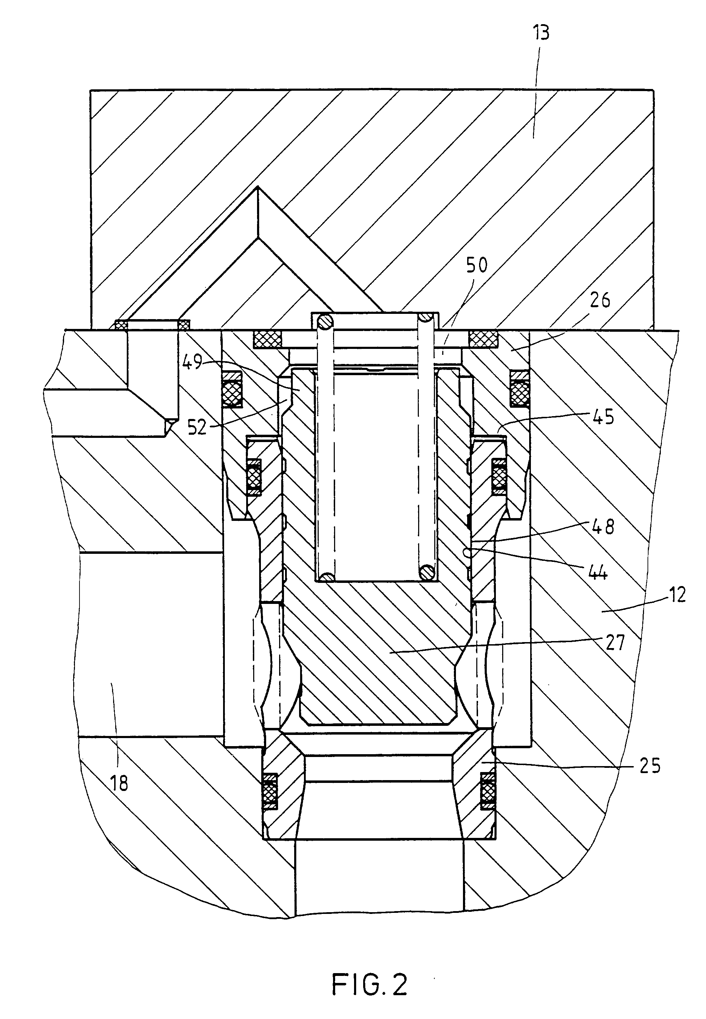

In der in Figur 2 gezeigten Position beginnt der Ventilkolben 27 mit seinem Endabschnitt 49 in den Innenbund 50 des Ringes 26 einzutauchen. Dadurch wird das Ölvolumen in dem Ringraum 52 eingeschlossen und muß über den engen Spalt zwischen dem Endabschnitt 49 und dem Innenbund 50 verdrängt werden. Die Bewegung des Ventilkolbens 27 geht nun gedämpft weiter.

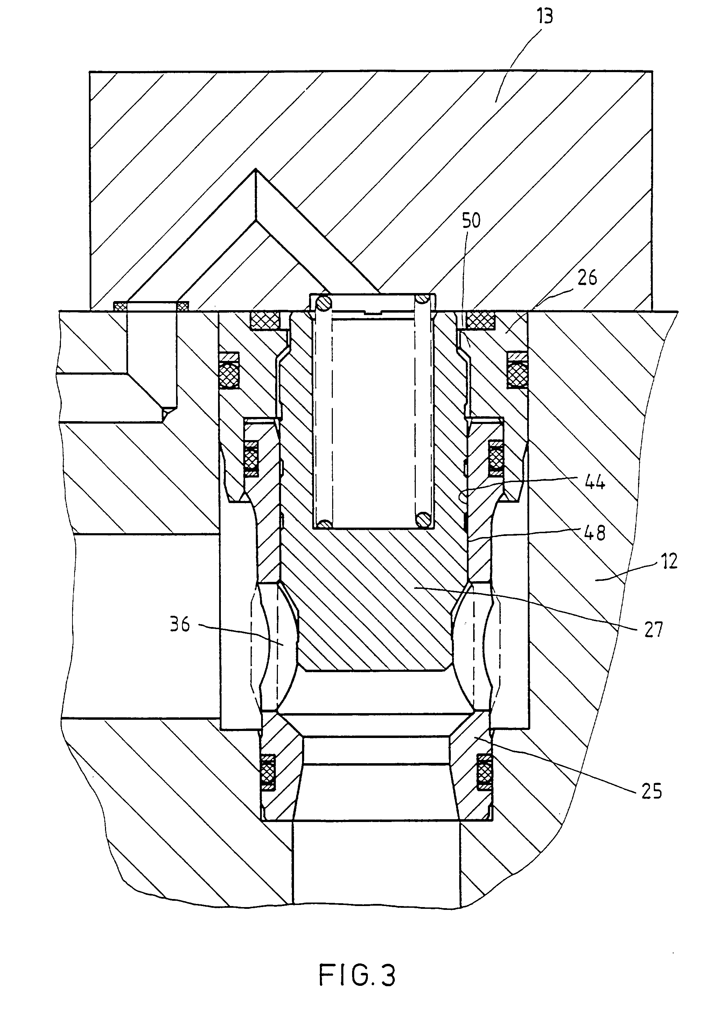

In der Darstellung nach Figur 3 schließlich hat der Ventilkolben 27 seinen maximalen Hub gemacht und ist gegen den Deckel 13 geschlagen. Man sieht, daß axial zwischen dem Ventilkolben 27 und dem Innenbund 50 des Ringes 26 noch ein Abstand besteht, der Ring 26 also das Anschlagen des Ventilkolbens 27 an den Deckel 13 nicht behindert. Man erkennt außerdem in Figur 3, daß die Führungsaußenfläche 48 des Ventilkolbens 27 nun etwa mit der Führungsbohrung 44 der Buchse 25 an den Radialbohrungen 36 endet. In der Schließstellung des Ventilkolbens 27 reicht die Führungsaußenfläche 48 am Ventilkolben 27 also etwa um den maximalen Hub über die Führungsbohrung 44 hinaus.

## Patentansprüche

1. Zwei-Wege-Einbauventil mit einem in eine Aufnahmebohrung (11) einbaubaren Einbausatz (10) und mit einem Ventildekkel (13) zum Verschließen der Aufnahmebohrung (11), wobei der Einbausatz (10) zweistückig eine ortsfest angeordnete Buchse (25) mit mindestens einem radialen Durchgang (36) und mit einem axialen Durchgang (37) und einen zwischen der Buchse (25) und dem Ventildeckel (13) ortsfest angeordneten Ring (26) und einen in der Buchse (25) axial verschiebbaren Ventilkolben (27) aufweist, mit dem eine Verbindung zwischen den radialen Durchgängen (36) und dem axialen Durchgang (37) der Buchse (25) steuerbar ist und der in Öffnungsrichtung von einer Schließstellung aus um einen maximalen Hub bis gegen einen Anschlag (13) verschiebbar ist, und wobei der Einbausatz (10) vorzugsweise eine den Ventilkolben (27) belastende Schließfeder (28) besitzt, **dadurch gekennzeichnet, daß** der Ventilkolben (27) in seiner Schließstellung bis zu einem von der dem Ring (26) zugewandten, ersten Stirnseite (45) der Buchse (25) gemessenen Abstand, der kleiner als der maximale Hub ist, von der Buchse (25) geführt ist und bei der Öffnungsbewegung über die Buchse hinaus in den Ring eintauchen kann.

2. Zwei-Wege-Einbauventil nach Anspruch 1, **dadurch gekennzeichnet, daß** die Führungsfläche (48) am Ventilkolben (27) länger ist als die Führungsfläche (44) an der Buchse (25) und in der Schließstellung des Ventilkolbens (27) bis in den Bereich der radialen Durchgänge (36) der Buchse (25) reicht.

3. Zwei-Wege-Einbauventil nach Anspruch 2, **dadurch gekennzeichnet, daß** die Führungsfläche (48) am Ventilkolben (27) in dessen Schließstellung eine dem maximalen Hub des Ventilkolbens (27) entsprechende Strecke in den Bereich der radialen Durchgänge (36) der Buchse (25) hineinreicht.

4. Zwei-Wege-Einbauventil nach einem der Ansprüche 1 bis 3, **dadurch gekennzeichnet, daß** der Ventildeckel (13) den Anschlag bildet, bis zu dem der Ventilkolben (27) in Öffnungsrichtung verschiebbar ist.

5. Zwei-Wege-Einbauventil nach einem vorhergehenden Anspruch, **dadurch gekennzeichnet, daß** zwischen dem Ring (26) und dem Ventildeckel (13) eine Axialdichtung (51) und zwischen der Buchse (25) und dem die Buchse außen axial übergreifenden Ring (26) eine Radialdichtung (33) angeordnet ist und daß der Dichtungsdurchmesser der Axialdichtung (51) kleiner als der Dichtungsdurchmesser der Radialdichtung (33) ist.

6. Zwei-Wege-Einbauventil nach den Ansprüchen 4 und 5, **dadurch gekennzeichnet, daß** der Ring (26) einen nach innen vorstehenden Bund (50) aufweist, dessen Innendurchmesser kleiner ist als der Innendurchmesser der Buchse (25) im Bereich der Führung des Ventilkolbens (27), und daß der Ventilkolben (27) einen Endabschnitt (49) aufweist, der schon in der Schließstellung des Ventilkolbens (27) in Richtung auf den Ventildeckel (13) zu über die Buchse (25) hinausragt und an dem der Außendurchmesser des Ventilkolbens (27) kleiner als der Innendurchmesser des Bundes (50) am Ring (26) ist.

7. Zwei-Wege-Einbauventil nach den Ansprüchen 4 und 5, **dadurch gekennzeichnet, daß** der Ring (26) einen nach innen vorstehenden Bund (50) aufweist, dessen Innendurchmesser kleiner ist als der Innendurchmesser der Buchse (25) im Bereich der Führung des Ventilkolbens (27), und daß der Ventilkolben (27) einen Endabschnitt (49) aufweist, der schon in der Schließstellung des Ventilkolbens (27) in Richtung auf den Ventildekkel (13) zu über die Buchse (25) hinausragt und an dem der Außendurchmesser des Ventilkolbens (27) nur geringfügig kleiner als der Innendurchmesser des Bundes (50) am Ring (26) ist, so daß sich eine hydraulische Anschlagdämpfung für den Ventilkolben (27) ergibt.

8. Zwei-Wege-Einbauventil nach Anspruch 5, 6 oder 7, **dadurch gekennzeichnet, daß** eines der beiden Teile Buchse (25) und Ring (26) in einer dem anderen Teil (26) axial gegenüberliegenden und vom anderen Teil (26) berührbaren Fläche (45) eine Unstetigkeit (56) aufweist.

9. Zwei-Wege-Einbauventil nach Anspruch 8, **dadurch gekennzeichnet, daß** durch die Unstetigkeit (56) eine offene Verbindung zwischen der Innenseite und der Außenseite der Buchse (25) geschaffen ist.

10. Zwei-Wege-Einbauventil nach Anspruch 9, **dadurch gekennzeichnet, daß** die Unstetigkeit durch eine Nut (56) in der dem Ring (26) gegenüberliegenden Stirnfläche (45) der Buchse (25) gebildet ist.

11. Zwei-Wege-Einbauventil nach einem vorhergehenden Anspruch, **dadurch gekennzeichnet, daß** die Buchse (25) an ihrer dem Ring (26) gegenüberliegenden Stirnfläche (45) außen mit einer Fase (58) versehen ist und daß eine offene Verbindung zwischen dem Ringraum (57) zwischen Buchse (25) und Ring (26) an der Fase (58) und der Innenseite der Buchse (25) besteht.

12. Zwei-Wege-Einbauventil nach einen vorhergehenden Anspruch, **dadurch gekennzeichnet, daß** zwischen der Buchse (25) und dem die Buchse (25) außen übergreifenden Ring (26) eine von der Buchse (25) aufgenommene Radialdichtung (33) angeordnet ist und daß im Bereich der Radialdichtung (33) der Außendurchmesser der Buchse (25) größer ist als in einem Abschnitt (30) jenseits der radialen Durchgänge (36).

13. Zwei-Wege-Einbauventil nach einem vorhergehenden Anspruch, **dadurch gekennzeichnet, daß** der Außendurchmesser der Buchse (25) im Bereich der radialen Durchgänge (36) größer ist als zwischen den radialen Durchgängen (36) und der dem Ring (26) abgewandten, zweiten Stirnseite (39) der Buchse (25).

14. Zwei-Wege-Einbauventil nach einem vorhergehenden Anspruch, **dadurch gekennzeichnet, daß** der Außendurchmesser der Buchse (25) in einem Bereich, der sich in Richtung auf die dem Ring (26) zugewandte, erste Stirnseite (45) an den Bereich der radialen Durchgänge (36) anschließt, kleiner ist als im Bereich der radialen Durchgänge (36).

## Claims

1. A two-way cartridge valve having an cartridge assembly (10) which can be installed in a receiving bore hole (11) and having a valve cover (13) for closing the receiving bore hole (11), whereby the cartridge assembly (10), which consists of two parts, has a fixed bush (25) with at least one radial passage (36) and with an axial passage (37)and a fixed ring (26) which is arranged between the bush (25) and the valve cover (13), and has a valve piston (27) which is axially displaceable within the bush (25) and by which a connection between the radial passages (36) and the axial passage (37) of the bush (25) can be controlled and which is displaceable in opening direction from a closed position over a maximum stroke up to a stop (13), and whereby the cartridge assembly (10) preferably has a closing spring (28) which acts on the valve piston (27), **characterized in that** the valve piston (27) is, in its closed position, guided by the bush (25) up to a distance measured from a first end (45) of the bush (25) which faces the ring (26), the said distance being shorter than the maximum stroke, and during the opening movement can travel beyond the bush to extend into the ring.

2. A two-way cartridge valve according to Claim 1, **characterized in that** the guidance surface (48) on the valve piston (27) is longer than the guidance surface (44) on the bush (25) and extends in the closed position of the valve piston (27) up into the region of the radial passages (36) of the bush (25).

3. A two-way cartridge valve according to Claim 2, **characterized in that** the guidance surface (48) on the valve piston (27) extends, in the closed position of the piston, into the region of the radial passages (36) of the bush (25) by a distance corresponding to the maximum stroke of the valve piston (27).

4. A two-way cartridge valve according to any of Claims 1 to 3, **characterized in that** the valve cover (13) forms the stop up to which the valve piston (27) is displaceable in the opening direction.

5. A two-way cartridge valve according to any of the preceding claims, **characterized in that** an axial seal (51) is arranged between the ring (26) and the valve cover (13) and a radial seal (33) is arranged between the bush (25) and the ring (26) which grips axially around the outside of the bush, and that the diameter of the axial seal (51) is smaller than the diameter of the radial seal (33).

6. A two-way cartridge valve according to Claims 4 and 5, **characterized in that** the ring (26) has an inward protruding collar (50) the inside diameter of which is smaller than the inside diameter of the bush (25) in the region of the guidance of the valve piston (27), and that the valve piston (27) has an end section (49) which, already in the closed position of the valve piston (27), extends beyond the bush (25) in the direction towards the valve cover (13) and on which the outside diameter of the valve piston (27) is smaller than the inside diameter of the collar (50) on the ring (26).

7. A two-way cartridge valve according to Claims 4 and 5, **characterized in that** the ring (26) has an inward protruding collar (50) the inside diameter of which is smaller than the inside diameter of the bush (25) in the region of the guidance of the valve piston (27), and that the valve piston (27) has an end section (49) which, already in the closed position of the valve piston (27), extends beyond the bush (25) in the direction towards the valve cover (13) and on which the outside diameter of the valve piston (27) is only slightly smaller than the inside diameter of the collar (50) on the ring (26), so that a hydraulic damping of the striking is obtained for the valve piston (27).

8. A two-way cartridge valve according to Claim 5, 6, or 7, **characterized in that** one of the two parts, bush (25) or ring (26), has a discontinuity (56) in a surface (45) which is axially opposite the other part (26) and can be contacted by the other part (26).

9. A two-way cartridge valve according to Claim 8, **characterized in that**, as a result of the discontinuity (56), an open communication is formed between the inside and the outside of the bush (25).

10. A two-way cartridge valve, according to Claim 9, **characterized in that** the discontinuity is formed by a groove (56) in the end face (45) of the bush (25) lying opposite the ring (26).

11. A two-way cartridge valve according to any of the preceding claims, **characterized in that** the bush (25) is provided at its end face (45) opposite the ring (26) on the outside with a bevel, and that an open communication exists between the annular space (57) between the bush (25) and ring (26) at the bevel (58) and the inner side of the bush (25).

12. A two-way cartridge valve according to any of the preceding claims, **characterized in that** between the bush (25) and the ring (26) which grips over the outside of the bush (25), there is a radial seal (33) received by the bush (25), and that in the region of the radial seal (33) the outside diameter of the bush (25) is greater than in a section (30) on the other side of the radial passages (36).

13. A two-way cartridge valve according to any of the preceding claims, **characterized in that** the outside diameter of the bush (25) in the region of the radial passages (36) is greater than between the radial passages (36) and the second end (39) of the bush (25) facing away from the ring (26).

14. A two-way cartridge valve according to any of the preceding claims, **characterized in that** the outside diameter of the bush (25) is smaller in a region which, in the direction towards the first end (45) which faces the ring (26), adjoins the region of the radial passages (36) than in the region of the radial passages (36).

## Revendications

1. Un élément en cartouche à deux voies doté d'un montage (10) en cartouche pouvant être monté dans un alésage (11) de positionnement et doté d'un couvercle (13) de valve prévu pour la fermeture de l'alésage (11) de positionnement, cependant que le montage (10) en cartouche présente sous forme de deux éléments une douille (25), qui est disposée de façon fixe et est pourvue d'au moins une conduite (36) de passage radial et d'une conduite (37) de passage axial, et un anneau (26), qui est disposé de façon fixe entre la douille (25) et le couvercle (13) de valve, et un tiroir (27) de valve, pouvant coulisser dans la direction axiale à l'intérieur de la douille (25), qui permet de commander une connexion entre les conduites (36) de passage radial et la conduite (37) de passage axial de la douille (25) et qui peut être amené à coulisser d'une course maximale à partir d'une position de fermeture jusqu'à une butée (13) dans le sens de l'ouverture, et cependant que le montage (10) en cartouche de préférence présente un ressort (28) de fermeture, qui sollicite le tiroir (27) de valve, **caractérisé en ce que** le tiroir (27) de valve dans sa position de fermeture est guidé par la douille (25) jusqu'à une distance, mesurée à partir de la première face (45) de la douille (25), laquelle est orientée vers l'anneau (26), qui est inférieure à la course maximale, et pendant le mouvement d'ouverture peut plonger dans l'anneau, au-delà de la douille.

2. Un élément en cartouche à deux voies conforme à la revendication n° 1, **caractérisé en ce que** la surface (48) de guidage sur le tiroir (27) de valve est plus longue que la surface (44) de guidage sur la douille (25) et pénètre, lorsque le tiroir (27) de valve est en position de fermeture, jusque dans la zone des conduites (36) de passage radial de la douille (25).

3. Un élément en cartouche à deux voies conforme à la revendication n° 2, **caractérisé en ce que** la surface (48) de guidage sur le tiroir (27) de valve pénètre, lorsque celui-ci est en position de fermeture, dans la zone des conduites (36) de passage radial de la douille (25) d'une distance, qui correspond à la course maximale du tiroir (27) de valve.

4. Un élément en cartouche à deux voies conforme à une des revendications n° 1 à n° 3, **caractérisé en ce que** le couvercle (13) de valve constitue la butée, jusqu'à laquelle le tiroir (27) de valve peut coulisser dans le sens de son ouverture.

5. Un élément en cartouche à deux voies conforme à une des revendications précédentes, **caractérisé en ce que** un joint (51) d'étanchéité axiale est disposé entre l'anneau (26) et le couvercle (13) de valve et un joint (33) d'étanchéité radiale est disposé entre la douille (25) et l'anneau (26), lequel exerce une prise extérieure sur la douille dans la direction axiale, et que le diamètre de joint du joint (51) d'étanchéité axiale est inférieur au diamètre de joint du joint (33) d'étanchéité radiale.

6. Un élément en cartouche à deux voies conforme aux revendications n^{os} 4 et 5, **caractérisé en ce que** l'anneau (26) présente un épaulement (50) protubérant vers l'intérieur, dont le diamètre intérieur est inférieur au diamètre intérieur de la douille (25) dans la zone de guidage du tiroir (27) de valve, et que le tiroir (27) de valve présente une extrémité (49), qui dépasse par rapport à la douille (25) dans le sens du couvercle (13) de valve, dès que le tiroir (27) de valve est en position de fermeture, et au niveau de laquelle le diamètre extérieur du tiroir (27) de valve est inférieur au diamètre intérieur de l'épaulement (50) sur l'anneau (26).

7. Un élément en cartouche à deux voies conforme aux revendications n^{os} 4 et 5, **caractérisé en ce que** l'anneau (26) présente un épaulement (50) protubérant vers l'intérieur, dont le diamètre intérieur est inférieur au diamètre intérieur de la douille (25) dans la zone de guidage du tiroir (27) de valve, et que le tiroir (27) de valve présente une extrémité (49), qui dépasse par rapport à la douille (25) dans le sens du couvercle (13) de valve, dès que le tiroir (27) de valve est en position de fermeture, et au niveau de laquelle le diamètre extérieur du tiroir (27) de valve n'est que légèrement inférieur au diamètre intérieur de l'épaulement (50) sur l'anneau (26), de façon à générer un amortissement hydraulique en butée pour le tiroir (27) de valve.

8. Un élément en cartouche à deux voies conforme à la revendication n^{os} 5, 6 ou 7, **caractérisé en ce que** un des deux éléments douille (25) et anneau (26) présente une discontinuité (56) sur une surface (45), qui est disposée en face de l'autre élément (26) dans la direction axiale et qui peut entrer en contact avec l'autre élément (26).

9. Un élément en cartouche à deux voies conforme à la revendication n° 8, **caractérisé en ce que** la discontinuité (56) crée une connexion ouverte entre le côté intérieur et le côté extérieur de la douille (25).

10. Un élément en cartouche à deux voies conforme à la revendication n° 9, **caractérisé en ce que** la discontinuité est formée par une rainure (56) dans la face (45) disposée en face de l'anneau (26) de la douille (25).

11. Un élément en cartouche à deux voies conforme à une des revendications précédentes, **caractérisé en ce que**, au niveau de sa face (45) disposée en face de l'anneau (26), la douille (25) est pourvue d'une phase (58) extérieure et qu'une connexion est maintenue ouverte entre la chambre (57) annulaire, située entre la douille (25) et l'anneau (26) au niveau de la phase (58), et le côté intérieur de la douille (25).

12. Un élément en cartouche à deux voies conforme à une des revendications précédentes, **caractérisé en ce que** un joint (33) radial, hébergé par la douille (25), est disposé entre la douille (25) et l'anneau (26), lequel exerce une prise extérieure sur la douille (25), et que le diamètre extérieur de la douille (25) dans la zone du joint (33) radial est supérieur à celui dans une section (30), laquelle est située au-delà des conduites (36) de passage radial.

13. Un élément en cartouche à deux voies conforme à une des revendications précédentes, **caractérisé en ce que** le diamètre extérieur de la douille (25) est plus grand dans la zone des conduites (36) de passage radial qu'entre les conduites (36) de passage radial et la seconde face (39) de la douille (25), laquelle est détournée de l'anneau (26).

14. Un élément en cartouche à deux voies conforme à une des revendications précédentes, **caractérisé en ce que** dans une zone connexe par rapport à la zone des conduites (36) de passage radial, dans le sens de la première face (45), laquelle est orientée vers l'anneau (26), le diamètre extérieur de la douille (25) est plus petit que dans la zone des conduites (36) de passage radial.
